(19) Europäisches Patentamt
European Patent Office
Office européen des brevets

(11) **EP 2 635 027 A1**

(12) **EUROPEAN PATENT APPLICATION**

(43) Date of publication:
**04.09.2013 Bulletin 2013/36**

(51) Int Cl.:
*H04N 7/26* (2006.01)

(21) Application number: **12305247.4**

(22) Date of filing: **01.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Bordes, Philippe**
**35576 Cesson-Sévigné (FR)**

• **Andrivon, Pierre**
**35576 Cesson-Sévigné (FR)**
• **Salmon, Philippe**
**35576 Cesson-Sévigné (FR)**

(74) Representative: **Perrot, Sébastien**
**Technicolor**
**1-5 rue Jeanne d'Arc**
**92130 Issy Les Moulineaux (FR)**

(54) **Method and device for encoding a picture with increased precision, method and device for reconstructing a picture with increased precision**

(57)     A method for encoding at least one current picture whose pixel values are in a range [0;max] is disclosed. The encoding method comprises:
- encoding into a bit stream and reconstructing (10) at least one reference picture;
- determining (12) a first value representative of an error between the current picture and a second modified picture, the second modified picture being obtained by modifying the current picture into a first modified picture with a current function so that the standard deviation of the histogram of the first modified picture is larger than the standard deviation of the histogram of the current picture while the pixel values of the first modified picture are in the range [0; max] and by modifying the modified picture into the second modified picture with a function inverse of the current function;
- modifying (14) the current picture with the current function when the first value is below a threshold value; and
- encoding (16, 18) into the bit stream the modified current picture using the at least one reconstructed reference picture.

FIGURE 3

EP 2 635 027 A1

**Description**

1. TECHNICAL FIELD

The invention is made in the field of video picture encoding.
More precisely, the invention is concerned with encoding and reconstructing of video pictures with higher precision.

2. BACKGROUND OF THE INVENTION

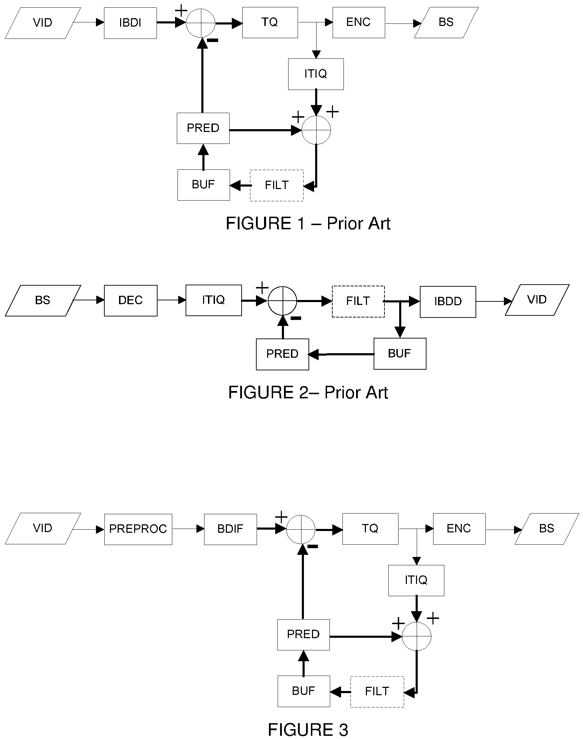

Internal Bit Depth Increase (IBDI) allows extending transforms precision and reference pictures buffer precision dynamically and can be used in an encoder with a view to improve the quality of reconstructed pictures.
As exemplarily depicted in **figure 1,** the principle of IBDI is to increase the original bit depth of the original picture samples of video VID of an input bit depth by bitIncrement to an increased bit depth. In Figure 1, bold arrows depict flow of data of increased bit depth while normal arrows depict flow of data of original bit depth. IBDI is done prior to transforming and quantizing TQ a residual with respect to a prediction PRED for encoding ENC into a bit stream BS. For prediction, reconstructed reference pictures of increased bit depth are used. The reconstructed reference pictures result from inverse quantization and inverse transformation ITIQ and are possibly, not necessarily, subjected to a de-blocking and in-loop filtering FILT before being buffered BUF.
At decoder side, as exemplarily depicted in **figure 2,** an internal bit depth decrease IBDD is applied, after a bit stream BS is received, decoded DEC, inverse quantized and inverse transformed ITIQ, combined with a prediction PRED coming from a buffer BUF and possibly filtered with the de-blocking and in-loop filtering FILT. After bit depth decrease IBDD the video VID is output. The decoded residuals and the reference pictures used for prediction are of said increased bit depth. Therefore, a picture of said increased bit depth is first reconstructed and is then bit depth decreased IBDD to reconstruct the output picture of the video VID.
Classically, bit depth increase is achieved by left shifting by bitIncrement (i.e. adding bitIncrement zeroes on the right of the sample value). Consequently, the memory amount required for the storage of the reference pictures in BUF is increased, more precisely is multiplied by $2^{bitIncrement}$. Increasing memory size is an issue especially for hardware implementation wherein the surface to be used on chip is critical.

3. SUMMARY OF THE INVENTION

The purpose of the invention is to overcome at least one of the disadvantages of the prior art. For this purpose, a method for encoding at least one current picture is disclosed. The values of pixels are in a range [0;max]. The method comprises:

- encoding into a bit stream and reconstructing at least one reference picture;
- determining a first value representative of an error between the current picture and a second modified picture, the second modified picture being obtained by modifying the current picture into a first modified picture with a current function so that the standard deviation of the histogram of the first modified picture is larger than the standard deviation of the histogram of the current picture while the pixel values of the first modified picture are in the range [0; max] and by modifying the modified picture into the second modified picture with a function inverse of the current function;
- modifying the current picture with the current function when the first value is below a threshold value; and
- encoding into the bit stream the modified current picture using the at least one reconstructed reference picture.

According to a specific embodiment, computing the first value comprises:

- modifying the current picture with the current function into a first modified picture;
- modifying the first modified picture with a function inverse of the current function into a second modified picture;
- computing an error between the current picture and the second modified picture, the first value being equal to the error.

According to a specific characteristic, computing the error between the current picture and the second modified picture comprises computing a sum of pixel errors divided by the number of pixels in the current picture.
According to a variant, computing the error comprises computing a psychovisual quality metric between the current picture and the second modified picture.
According to another embodiment, determining the first value comprises:

- determining an histogram of the current picture;
- determining from the histogram a second value $HC_a$ maximizing a sum of occurrences of sample values in-between $[HC_a$-range; $HC_a$+range], with range strictly inferior to max;
- determining the sum of occurrences of sample values outside $[HC_a$-range; $HC_a$+range)], the first value being equal to the sum.

According to a specific characteristic, range equals max divided by 4.

According to another aspect of the invention, the method further comprises determining the current function as the function maximizing the standard deviation of the histogram of the modified current picture while minimizing the first value.

According to another aspect of the invention, a plurality of components being associated with each pixel, the method is applied independently on each component.

Advantageously, the method comprises encoding the current function into the bit stream.

According to a variant, the method comprises encoding an inverse function of the current function into the bit stream.

Advantageously, encoding the at least one reference picture comprises modifying the reference picture with a reference function different from the current function and encoding the modified current picture comprises:

- modifying the reconstructed reference picture into a first modified reconstructed reference picture with a function inverse of the reference function;
- modifying the first modified reconstructed reference picture with the current function into a modified reconstructed reference picture; and
- encoding the modified current picture using the modified reconstructed reference picture.

A method for reconstructing at least one current picture encoded into a bit stream is further disclosed. The values of the pixels of the at least one current picture are in a range [0;max]. Encoding the at least one current picture comprises modifying the current picture with a current functionThe method for reconstructing comprises:

- reconstructing at least one reference picture encoded into the bit stream, wherein encoding of the at least one reference picture comprises modifying the reference picture with a reference function different from the current function;
- modifying the reconstructed reference picture into a first modified reconstructed reference picture with a function inverse of the reference function;
- modifying the first modified reconstructed reference picture with the current function into a modified reconstructed reference picture;
- reconstructing the current picture using the modified reconstructed reference picture.

According to a specific embodiment, the method of reconstruction further comprises modifying the reconstructed current picture with a function inverse of the current function.

A device for encoding at least one current picture whose pixel values are in a range [0;max] is disclosed. The device comprises:

- means for encoding and for reconstructing at least one reference picture;
- means for determining a first value representative of an error between the current picture and a reconstructed picture, the reconstructed picture being obtained by modifying the current picture into a modified picture with a current function so that the standard deviation of the histogram of the modified picture is larger than the standard deviation of the histogram of the current picture while the pixel values of the modified picture are in the range [0; max] and by modifying the modified picture into the reconstructed picture with a function inverse of the current function;
- means for modifying the current picture with the current function when the first value is below a threshold value; and
- means encoding into a bit stream the modified current picture using the at least one reconstructed reference picture.

A device for reconstructing at least one current picture encoded into a bit stream is further disclosed. The values of pixels of the at least one current picture being in a range [0;max]. Encoding of the at least one current picture comprises modifying the current picture with a current function. The device for reconstructing comprises:

- means for reconstructing at least one reference picture encoded into the bit stream, wherein encoding of the at least one reference picture comprises modifying the reference picture with a reference function different from the current function;

- means for modifying the reconstructed reference picture into a first modified reconstructed reference picture with a function inverse of the reference function;
- means for modifying the first modified reconstructed reference picture with the current function into a modified reconstructed reference picture; and
- means for reconstructing the current picture using the modified reconstructed reference picture.

## 4. BRIEF DESCRIPTION OF THE DRAWINGS

Other features and advantages of the invention will appear with the following description of some of its embodiments, this description being made in connection with the drawings in which:

- Figure 1 depicts an exemplary prior art encoder;
- Figure 2 depicts an exemplary prior art decoder;
- Figure 3 depicts an exemplary encoder according to a first embodiment of the invention;
- Figure 4 represents histograms of pictures;
- Figure 5 depicts a flowchart of an encoding method according to the invention;
- Figure 6 represents an original histogram of a picture and an extended histogram of this picture;
- Figure 7 depicts an exemplary encoder according to another embodiment of the invention;
- Figure 8 depicts an exemplary decoder according to the invention; and
- Figure 9 depicts a flowchart of an reconstruction method according to the invention.

## 5. DETAILED DESCRIPTION OF THE INVENTION

It is to be understood that the present principles may be implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

The invention may be realized on any electronic device comprising coding or decoding means correspondingly adapted. For instance, the invention may be realized in a television, a mobile videophone, a personal computer, a digital video camera, a navigation system or a car video system.

VID is a video or sequence of pictures. Each picture comprises pixels. At least one component is associated with each pixel, possibly three such as RGB, YCrCb, etc. The pixel values of the components lie in an admissible range [0; max], max=$2^{bitdeptn}$-1. If a component is represented with a bit depth of 8 bits then the admissible range is [0; $2^8$-1]. The admissible range is the range of values that a component can take.

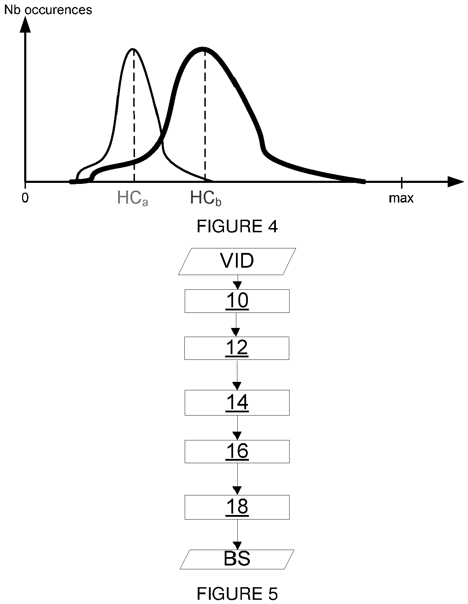

In a first exemplary embodiment depicted in **figure 3**, it is proposed to replace in the encoding device of figure 1, IBDI with a PREPROC preanalysis module and a BDIF precision increase module in order to emulate the IBDI without increasing the storage amount required to store the reconstructed reference pictures. Indeed, when one or more components of the input video VID has small range values as depicted on **figure 4**, then the input range values can be extended to the actual admissible range [0;max]. If not, then the corresponding component of the picture is not modified. Emulating IBDI is done prior to transforming and quantizing TQ a residual with respect to a prediction PRED for encoding ENC into a bit stream BS. For prediction, reconstructed reference pictures of increased precision are used. The reconstructed reference pictures result from inverse quantization and inverse transformation ITIQ are buffered. The reconstructed reference pictures are possibly subjected to a de-blocking and in-loop filtering FILT before being buffered BUF.

**Figure 5** depicts a flowchart of an encoding method according to the invention.

In a step 10, a reference picture is encoded and reconstructed.

In a step 12, PREPROC determines a first value representative of an error between a current picture to be encoded and a second modified picture that is obtained by modifying the current picture into a first modified picture with a BDIF current function and by modifying the first modified picture into the second modified picture with a function inverse of said current BDIF function. PREPROC operates either on the whole picture or independently on each component. According to another variant, PREPROC operates on a GOP ("Group Of Pictures"). In this case, the first value is representative of a GOP error. In the following, a picture designates either the whole picture or one of its components. The current BDIF function is defined such that the standard deviation of the histogram of the modified picture is larger than the standard deviation of the histogram of the current picture while the pixel values of the modified picture are also in the range [0;max]. The current BDIF function is defined such that it increases picture precision while keeping pixel values in [0;max].

According to a first embodiment, determining the first value comprises explicitly modifying the pictures. PREPROC thus modifies the current picture with the current BDIF function into a first modified picture, then modifies the first modified picture with a function inverse of the current BDIF function into a second modified picture. Finally, PREPROC computes an error between said current picture and said second modified picture. The first value is set equal to the error.

As an example, computing the error between said current picture and the second modified picture comprises computing a sum of pixel errors divided by the number of pixels in said current picture. In this case, the first value

$$\frac{\sum_{x=0,y=0}^{x=N-1,y=M-1}(Ic(x,y)-I'_c(x,y))}{N*M} ,$$ where N is the height and M the width of the current picture, Ic(x,y) is the value of the pixel (x,y) in the current picture and Ic'(x,y) is the value of the pixel (x,y) in the second modified picture.

According to a variant of the first embodiment, computing the error comprises computing a psychovisual quality metric between the current picture and the second modified picture. As an example, the psychovisual quality metric is the SSIM (English acronym of Structural SIMilarity).

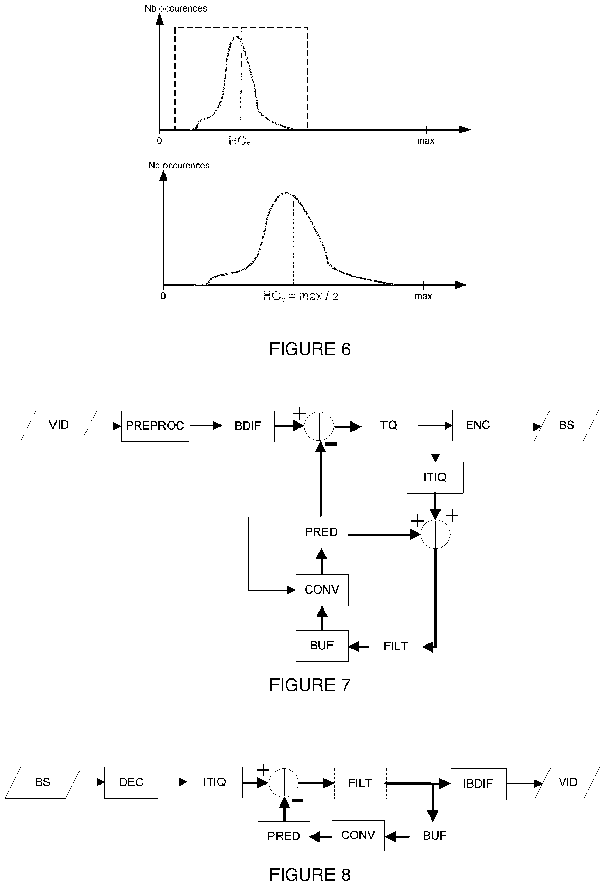

According to a second embodiment, determining the first value does not comprise explicitly determining the second modified picture. PREPROC computes the histogram of the current picture and determines the first value from this histogram. More precisely, PREPROC determines from the histogram a second value $HC_a$ maximizing a sum of occurrences of sample values in-between [$HC_a$-range; $HC_a$+range], with range strictly inferior to max as depicted on **figure 6**. Then, PREPROC determines the sum of occurrences of sample values outside [$HC_a$-range; $HC_a$+range]. The first value is set equal to this sum. This sum is representative of an error between a current picture to be encoded and the second modified picture. As an example, range=(max/4).

In a step 14, the BDIF precision increase module modifies the values of the current picture according to the current BDIF function when the first value is below a threshold. To this aim, a monotonous increasing function BDIF is used. An example of such current BDIF function is given below:

$$value(b) = 2^{bitIncrement} \times (value(a) - HC_a) + HC_b \ (1)$$

Therefore, each pixel value value(a) of the current picture or current picture component for which the first value is below the threshold is modified into a picture value(b). As an example, $HC_b$=max/2.

In figure 6, the original histogram is centered at HCa and is thus transformed into an histogram centered at HCb. Each value of the current picture is thus transformed into a value b according to the above equation. The BDIF function can be linear or not (e.g. logarithmic) with truncation or not. According to a variant, the BDIF function is a piecewise varying value that varies according to value(a).

$$value(b) = 2^{bitIncrement} \times (value(a) - HC_a) + HC_b, \text{ if } value(a) \in [HC_a - HC_c; HC_a + HC_c]$$

$$value(b) = 2^{(bitIncrement-1)} \times (value(a) - HC_a) + HC_b, \text{ otherwise}$$

As an example, $HC_c = max/8$.

According to another variant, the BDIF function is logarithmic:

$$value(b) = \log[\ 1 + 2^{bitIncrement} \times (value(a) - HC_a)\ ] + HC_b$$

According to another embodiment, the current BDIF function is determined as the function maximizing the standard deviation of the histogram of the modified current picture while minimizing the first value.

If the BDIF function is the one given by equation (1) and if in addition $HC_a$ and $HC_b$ are fixed values such as (128;128) for 8 bits components (i.e. max=($2^8$-1)), then only *bitIncrement* is transmitted for each component.

Advantageously, when the original histogram standard deviation is below $2^{bitdeptn-1}$ where bitdepth is the bit depth, e.g. bitdepth = 8, then the input video sample values can be increased by 2 and benefit the advantage of IBDI, while the stored sample values are still in the range [0;max]. Advantageously, the BUF memory size is not increased.

At step 16, residues are determined based on the possibly modified current picture and a prediction. As an example, the prediction is subtracted from the processed input video. The prediction is determined from already encoded and reconstructed pictures stored in the BUF memory known as reference pictures.

At step 18, the residue is transformed and quantized by a quantization step in module TQ. ENC then encodes the quantized residue into the bit stream BS. The BDIF function can be pre-defined and thus known by both the encoder and the decoder. In a variant, the BDIF function or its inverse function is coded and transmitted in the bit stream so that the decoder reconstruct the pictures with the original sample range values by applying the inverse BDIF function.

According to a specific embodiment, a flag is further encoded into the bit stream BS that indicates if the current picture is modified when encoding.

According to a second embodiment, the BDIF function can vary depending on the picture or group of pictures to encode as depicted on **figures 7**. This dynamic adaptation can be controlled by the pre-analysis module PREPROC . If the current picture uses $BDIF_{cur}$ and the reference picture $I_{ref}$ uses $BDIF_{ref}$, then a precision converter module CONV is used to modify the reconstructed reference picture to be used for prediction:

$$Iref' = PrecisionConverter(Iref) = BDIF_{cur}( BDIF_{ref}^{-1}(Iref) )$$

If no IBDI emulation is used, $BDIF_{cur}$ (and/or $BDIF_{ref}$) is Identity function.

The precision converter module CONV thus transforms the reconstructed reference picture Iref stored in BUF into a reconstructed reference picture I'ref so that the modified reconstructed reference picture I'ref uses the same BDIF function as the current picture. The current picture is thus encoded using the modified reconstructed reference picture I'ref instead of Iref.

At decoder side, as exemplarily depicted in **figure 8** an internal bit depth decrease IBDIF is possibly applied, after a bit stream BS is received, decoded DEC, inverse quantized and inverse transformed ITIQ, combined with a prediction PRED coming from a buffer BUF and possibly filtered with the de-blocking and in-loop filtering FILT. After bit depth decrease IBDIF the video VID is output. The decoded residuals and the reference pictures used for prediction are of said increased precision. Therefore, a current picture of said increased bit depth is first reconstructed and is then bit depth decreased IBDIF to reconstruct the output picture of the video VID.

The decoder also known as reconstructing device possibly further comprises a module for modifying the pictures according to an inverse BDIF function (IBDIF). According to a specific embodiment the decoder comprises a precision converter module CONV that transform the reference picture to be used for prediction.

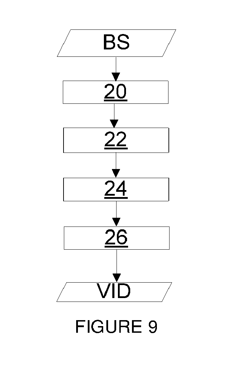

A method of reconstructing a current picture is further disclosed with reference to **figure 9**. The current picture is encoded in the bit stream BS according to the encoding method disclosed with respect to figures 3 to 7.

In a step 20, at least one reference picture $I_{ref}$ is reconstructed from BS, wherein encoding of the reference picture comprises modifying said reference picture with a reference function $BDIF_{ref}$ different from the current function $BDIF_{cur}$ used for encoding the current picture. The reconstructed reference picture is stored in BUF memory.

In a step 22, the reconstructed reference picture is modified. The precision converter module CONV is used to modify the reconstructed reference picture to be used for prediction:

$$Iref' = PrecisionConverter(Iref) = BDIF_{cur}( BDIF_{ref}^{-1}(Iref) )$$

If no IBDI emulation is used, $BDIF_{cur}$ (and/or $BDIF_{ref}$) is *Identity* function.

The precision converter module CONV thus transforms the reconstructed reference picture Iref stored in BUF into a reconstructed reference picture I'ref so that the modified reconstructed reference picture I'ref uses the same BDIF function as the current picture.

In a step 24, the current picture is reconstructed from the modified reconstructed reference picture I'ref. To this aim, the bit stream BS is decoded in DEC into coefficients using for example an entropy decoder and the coefficients are dequantized and inverse transformed into residues by module ITIQ. The current picture is reconstructed based on the residues and a prediction. The prediction is determined from already encoded pictures stored in the BUF memory. As an example, the residues are added to the prediction in order to reconstruct the current picture.

In an optional step 26, the reconstructed current picture is processed with a function which is the inverse function of the BDIF function applied on the encoder side in step 14. According to a specific embodiment, the BDIF function is decoded from the bit stream. According to a variant, the current BDIF function is known by the decoder.

According to a specific embodiment, a flag is further decoded from the bit stream BS that indicates if the current picture to be reconstructed was modified when encoded.

**Claims**

1. Method for encoding at least one current picture whose pixel values are in a range [0;max] **characterized in that** the method comprises:

    - encoding into a bit stream and reconstructing (10) at least one reference picture;
    - determining (12) a first value representative of an error between said current picture and a second modified picture, said second modified picture being obtained by modifying said current picture into a first modified picture with a current function so that the standard deviation of the histogram of the first modified picture is larger than the standard deviation of the histogram of the current picture while the pixel values of said first modified picture are in said range [0; max] and by modifying said modified picture into said second modified picture with a function inverse of said current function;
    - modifying (14) said current picture with said current function when said first value is below a threshold value; and
    - encoding (16, 18) into said bit stream the modified current picture using said at least one reconstructed reference picture.

2. Method for encoding according to claim 1, wherein computing the first value comprises:

    - modifying said current picture with said current function into a first modified picture;
    - modifying said first modified picture with a function inverse of said current function into a second modified picture; and
    - computing an error between said current picture and said second modified picture, said first value being equal to said error.

3. Method for encoding according to claim 2, wherein computing the error between said current picture and said second modified picture comprises computing a sum of pixel errors divided by the number of pixels in said current picture.

4. Method for encoding according to claim 2, wherein computing the error comprises computing a psychovisual quality metric between said current picture and said second modified picture.

5. Method for encoding according to claim 1, wherein determining the first value comprises:

    - determining an histogram of said current picture;
    - determining from said histogram a second value $HC_a$ maximizing a sum of occurrences of sample values in-between [$HC_a$-range; $HC_a$+range], with range strictly inferior to max; and
    - determining the sum of occurrences of sample values outside [$HC_a$-range; $HC_a$+range)], said first value being equal to said sum.

6. Method for encoding according to claim 5, wherein range equals max divided by 4.

7. Method for encoding according to claim 1, further comprising determining said current function as the function maximizing the standard deviation of the histogram of the modified current picture while minimizing the first value.

8. Method for encoding according to claim 1, wherein a plurality of components being associated with each pixel, the method is applied independently on each component.

9. Method for encoding according to any of claims 1 to 8, wherein said method comprises encoding said current function into said bit stream.

10. Method for encoding according to any of claims 1 to 8, wherein said method comprises encoding an inverse function of said current function into said bit stream.

11. Method for encoding according to any of claims 1 to 10, wherein encoding (10) said at least one reference picture comprises modifying said reference picture with a reference function different from said current function and wherein encoding (16, 18) said modified current picture comprises:

- modifying said reconstructed reference picture into a first modified reconstructed reference picture with a function inverse of said reference function;
- modifying said first modified reconstructed reference picture with said current function into a modified reconstructed reference picture; and
- encoding the modified current picture using said modified reconstructed reference picture.

12. Method for reconstructing at least one current picture encoded into a bit stream, pixel values of said at least one current picture being in a range [0;max], wherein encoding of said at least one current picture comprises modifying said current picture with a current function **characterized in that** the method comprises:

- reconstructing (20) at least one reference picture encoded into said bit stream, wherein encoding of said at least one reference picture comprises modifying said reference picture with a reference function different from said current function;
- modifying (22) said reconstructed reference picture into a first modified reconstructed reference picture with a function inverse of said reference function;
- modifying (22) said first modified reconstructed reference picture with said current function into a modified reconstructed reference picture; and
- reconstructing (24) the current picture using said modified reconstructed reference picture.

13. Method for reconstructing according to claim 12, further comprising modifying said reconstructed current picture (24) with a function inverse of said current function.

14. Device for encoding at least one current picture whose pixel values are in a range [0;max] **characterized in that** the device comprises:

- means for encoding (TQ, ENC) and for reconstructing (ITIQ) at least one reference picture;
- means for determining (PREPROC) a first value representative of an error between said current picture and a reconstructed picture, said reconstructed picture being obtained by modifying said current picture into a modified picture with a current function so that the standard deviation of the histogram of the modified picture is larger than the standard deviation of the histogram of the current picture while the pixel values of said modified picture are in said range [0; max] and by modifying said modified picture into said reconstructed picture with a function inverse of said current function;
- means for modifying (BDIF) said current picture with said current function when said first value is below a threshold value; and
- means encoding (TQ, ENC) into a bit stream the modified current picture using said at least one reconstructed reference picture.

15. Device for reconstructing at least one current picture encoded into a bit stream, pixel values of said at least one current picture being in a range [0;max], wherein encoding of said at least one current picture comprises modifying said current picture with a current function **characterized in that** the device comprises:

- means for reconstructing (DEC, ITIQ, BUF) at least one reference picture encoded into said bit stream, wherein encoding of said at least one reference picture comprises modifying said reference picture with a reference function different from said current function;
- means for modifying (CONV) said reconstructed reference picture into a first modified reconstructed reference picture with a function inverse of said reference function;
- means for modifying (CONV) said first modified reconstructed reference picture with said current function into a modified reconstructed reference picture; and
- means for reconstructing (DEC, ITIQ) the current picture using said modified reconstructed reference picture.

VID → IBDI → (+/−) → TQ → ENC → BS

ITIQ → (+/+) ← PRED

PRED ← BUF ← FILT

**FIGURE 1 – Prior Art**

BS → DEC → ITIQ → (+/−) → FILT → IBDD → VID

PRED ← BUF

**FIGURE 2– Prior Art**

VID → PREPROC → BDIF → (+/−) → TQ → ENC → BS

ITIQ → (+/+) ← PRED

PRED ← BUF ← FILT

**FIGURE 3**

Nb occurences

0          HC$_a$        HC$_b$                    max

FIGURE 4

VID

10

12

14

16

18

BS

FIGURE 5

FIGURE 6

FIGURE 7

FIGURE 8

BS

20

22

24

26

VID

FIGURE 9

Europäisches
Patentamt
European
Patent Office
Office européen
des brevets

# EUROPEAN SEARCH REPORT

**Application Number**

EP 12 30 5247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/243232 A1 (ALSHINA ELENA [KR] ET AL) 6 October 2011 (2011-10-06) * paragraphs [0008], [0009], [0087] - [0092], [0112], [0113], [0128], [0136] * * figures 3, 5 * | 1-15 | INV. H04N7/26 |
| A | WO 2008/011502 A2 (QUALCOMM INC [US]; RAVEENDRAN VIJAYALAKSHMI R [US]) 24 January 2008 (2008-01-24) * paragraphs [0061], [0064]; figure 2 * | 1-15 | |
| A | EP 1 631 090 A1 (MATSUSHITA ELECTRIC IND CO LTD [JP]) 1 March 2006 (2006-03-01) * paragraphs [0050] - [0054]; figure 12 * | 1-15 | |
| A | EP 0 725 536 A2 (CANON KK [JP]) 7 August 1996 (1996-08-07) * column 6, lines 11-41 * | 1-15 | |
| | | | **TECHNICAL FIELDS SEARCHED (IPC)** H04N |

The present search report has been drawn up for all claims

| Place of search | Date of completion of the search | Examiner |
|---|---|---|
| Munich | 30 August 2012 | Montoneri, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 12 30 5247

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2012

| Patent document cited in search report | | Publication date | Patent family member(s) | | Publication date |
|---|---|---|---|---|---|
| US 2011243232 | A1 | 06-10-2011 | US 2011243232 A1 | | 06-10-2011 |
| | | | WO 2011126272 A2 | | 13-10-2011 |
| WO 2008011502 | A2 | 24-01-2008 | EP 2052547 A2 | | 29-04-2009 |
| | | | JP 2009545212 A | | 17-12-2009 |
| | | | KR 20090037939 A | | 16-04-2009 |
| | | | TW 200818918 A | | 16-04-2008 |
| | | | US 2008024513 A1 | | 31-01-2008 |
| | | | WO 2008011502 A2 | | 24-01-2008 |
| EP 1631090 | A1 | 01-03-2006 | EP 1631090 A1 | | 01-03-2006 |
| | | | JP 2006074777 A | | 16-03-2006 |
| EP 0725536 | A2 | 07-08-1996 | DE 69627407 D1 | | 22-05-2003 |
| | | | DE 69627407 T2 | | 08-01-2004 |
| | | | EP 0725536 A2 | | 07-08-1996 |
| | | | ES 2193226 T3 | | 01-11-2003 |
| | | | US 5929908 A | | 27-07-1999 |

EPO FORM P0459

For more details about this annex : see Official Journal of the European Patent Office, No. 12/82